# EUROPÄISCHE PATENTSCHRIFT

(11) **EP 3 687 858 B1**
(45) Veröffentlichungstag und Bekanntmachung des Hinweises auf die Patenterteilung: **02.06.2021**
(21) Anmeldenummer: 18815176.5
(22) Anmeldetag: 05.12.2018
(51) Int. Cl.: B60Q 1/08, B60Q 1/50

(54) **LICHTPROJEKTIONSVORRICHTUNG FÜR EIN KRAFTFAHRZEUG**
LIGHT PROJECTION DEVICE FOR A MOTOR VEHICLE
DISPOSITIF DE PROJECTION DE LUMIÈRE POUR VÉHICULE AUTOMOBILE

(30) Priorität: 20.12.2017 DE 102017223448
(43) Veröffentlichungstag der Anmeldung: 05.08.2020
(73) Patentinhaber: Audi AG, 85045 Ingolstadt (DE)
(72) Erfinder: OMERBEGOVIC, Said, 60311 Frankfurt am Main (DE); REIM, Johannes, 85072 Eichstätt (DE)
(86) Internationale Anmeldenummer: PCT/EP2018/083614
(87) Internationale Veröffentlichungsnummer: WO 2019/121007

(56) Entgegenhaltungen:
- EP-A1- 3 118 515
- WO-A1-2015/113583
- DE-A1-102011 119 923
- DE-A1-102012 002 058
- DE-B3-102011 081 394
- US-A1- 2017 240 096

## Beschreibung

Die vorliegende Erfindung betrifft eine Lichtprojektionsvorrichtung für ein Kraftfahrzeug zur Unterstützung bei einer Routenführung.

Bei einer aktivierten Navigationsführung wird die Route oft in sogenannten Man-Machine-Interface (MMI), dem Kombiinstrument oder dem Head-up-Display dargestellt. Ein Spurlicht, das durch einen hochauflösenden Scheinwerfer realisiert wird, beleuchtet die eigene, aktuelle befahrene Fahrspur. Dazu muss jedoch der Fahrer seinen Blick von der Straße abwenden, um der Routenführung folgen zu können. Das Spurlicht an sich gibt dem Fahrer keinerlei Informationen über notwendige Spurwechsel oder Ausfahrten und kann bei der Routenführung sogar irritieren, da nur die aktuelle befahrene Fahrspur beleuchtet wird.

Die Offenlegungsschrift DE 10 2014 000 935 A1 betrifft ein Verfahren und eine Anordnung zur Erzeugung eines Fahrbahnlichtdisplays für Fahrzeuge. Die Anordnung weist eine oder mehrere Digitalprojektoren zur echtzeitfähigen dreidimensionalen Beleuchtung der Fahrbahn vor dem Fahrzeug in Kombination mit einem Kamerasystem zur echtzeitfähigen virtuellen 3D-Rekondstruktion der Verkehrsszene auf. Darüber hinaus beinhaltet diese Anordnung ein Informationsverarbeitungsmittel, das zur Bilderfassung, Bildverarbeitung, Objekterkennung, Grafikerzeugung, Grafikverarbeitung und Ansteuerung der Projektoren dient. Durch die Erfindung werden gewünschte Oberflächen vor dem Fahrzeug, insbesondere die Fahrbahn, derart beleuchtet, dass ein Fahrbahnlichtdisplay mit variablem graphischem Inhalt gebildet wird. Dieses passt sich dynamisch an die Verkehrs-, Fahr- und Umweltsituation sowie den Bedürfnissen des Fahrers an. Ein weiteres optionales Kamerasystem wird zur Erfassung der Kopfposition, Blickrichtung und Blickweite des Fahrers zur Steuerung der räumlichen Helligkeitsanpassung oder zur Steuerung von projizierten graphischen Objekten verwendet.

Die Offenlegungsschrift DE 10 2013 222 467 A1 beschreibt ein Verfahren und eine Vorrichtung zur Querführungsunterstützung eines Kraftfahrzeugs. Dazu wird in Fahrtrichtung vor dem Kraftfahrzeug ein Lichtmuster in der Form zweier parallel zur Fahrzeuglängsachse verlaufender Lichtbalken vorgegebener Länge und Breite und vorgegebenem Abstand auf die aktuell befahrene Fahrspuroberfläche projiziert. Die Lichtintensität und/oder die Farbe des Lichtbalkens ist eine Funktion der Position des Kraftfahrzeugs auf der aktuellen Fahrspur. Die Vorrichtung zur Querführungsunterstützung eines Kraftfahrzeugs wird vorzugsweise als Warnmittel vor einem unbeabsichtigten Verlassen einer Fahrbahnspur eingesetzt.

Die Patentschrift DE 11 2010 003 800 B4 beschreibt eine Fahrzeugbeleuchtungsvorrichtung, die einen ersten Beleuchtungsabschnitt und einen zweiten Beleuchtungsabschnitt bereitstellt. Der erste Beleuchtungsabschnitt ist dazu ausgelegt, in einer Fahrrichtung eines Fahrzeugs zu leuchten. Der zweite Beleuchtungsabschnitt wird so gesteuert, dass er in Richtung einer empfohlenen Route, die sich von der Fahrtrichtung, in welche der erste Beleuchtungsabschnitt leuchtet, unterscheidet. Der zweite Beleuchtungsabschnitt kann gegenüber dem ersten Beleuchtungsabschnitt in einer anderen Farbe leuchten.

Die DE 10 2011 119 923 A1 offenbart ein Beleuchtungssystem für Luft- und Landfahrzeuge sowie Arbeitsmaschinen zur Projektion von zielgerichteten optischen Orientierungshilfen/Mustern während des Betriebs mit folgenden Bestandteilen: Eine integrierbare Steuereinheit, die die nötigen Daten für den gewünschten Betriebsmodus sammelt bzw. überwacht und die erwünschte bewegbare Projektion steuert bzw. Befehle an die anderen Komponenten weitergibt; eine oder mehrere integrierte/eigenständig angebrachte Projektionseinheiten, bestehend aus einer zweckmäßigen Lichtquelle und einer Vielzahl von steuerbaren Linsen, die die gewünschte Projektion auf die variierenden Zielpositionen projizieren.

Die EP 3 118 515 A1 beschreibt ein Fahrzeugleuchte mit einer Laserlichtquelle, welche dazu ausgebildet ist, einen Laserstrahl ausgehend von der Laserlichtquelle hin zu einer Emissionsseite zu emittieren. Die Fahrzeugleuchte weist eine Lichtabdeckungseinheit auf. Außerdem ist eine Darstellung von Objekten auf einer benachbarten Fahrspur gezeigt, um einen Fahrer eines nachfolgenden Fahrzeuges über einen bevorstehen Spurwechsel zu informierer. Die US 2017/240096 A1 beschreibt eine weitere Lichtprojektionsvorrichtung für ein Kraftfahrzeug zur Unterstützung bei einer Routenführung.

Die vorliegende Erfindung stellt sich die Aufgabe, eine Routenführung zu erleichtern.

Diese Aufgabe wird gemäß den unabhängigen Ansprüchen gelöst. Sinnvolle Weiterbildungen ergeben sich aus den Unteransprüchen.

Die vorliegende Erfindung sieht eine Lichtprojektionsvorrichtung für ein Kraftfahrzeug zur Unterstützung bei einer Routenführung vor. Die Lichtprojektionsvorrichtung beinhaltet einen Sensor zum Erfassen einer Ist-Fahrspur, auf der sich das Kraftfahrzeug momentan befindet. Des Weiteren weist die Lichtprojektionsvorrichtung ein Navigationssystem zum Bereitstellen einer von der Ist-Fahrspur verschiedenen Soll-Fahrspur für die Routenführung auf. Die Lichtprojektionsvorrichtung weist zudem eine Steuereinheit auf, welche anhand der Ist-Fahrspur und der Soll-Fahrspur eine zu beleuchtende Fläche berechnet. Dabei weist die zu beleuchtende Fläche entlang einer Fahrtrichtung des Kraftfahrzeugs eine größere Ausdehnung auf als senkrecht zu dieser Fahrtrichtung. Die zu beleuchtende Fläche hat einen ersten Teilbereich mit einem ersten Flächenschwerpunkt, der auf der Ist-Fahrspur liegt. Der erste Teilbereich erstreckt sich über eine gesamte Breite der Ist-Fahrspur. Die zu beleuchtende Fläche weist zudem einen zweiten Teilbereich mit einem zweiten Flächenschwerpunkt auf. Der zweite Flächenschwerpunkt liegt auf der Soll-Fahrspur. Zudem erstreckt sich der zweite Teilbereich über eine gesamte Breite der Soll-Fahrspur. Die Lichtprojektionsvorrichtung beinhaltet ferner eine Projektionseinheit, welche entsprechend auf der von der Steuereinheit berechneten zu beleuchtenden Fläche Licht projiziert.

Die Erstreckung des ersten oder zweiten Teilbereichs über die gesamte Breite der Ist-Fahrspur oder Soll-Fahrspur bedeutet insbesondere, dass die jeweiligen Teilbereiche Teilflächen aufweisen, die sich über die gesamte Breite der Ist-Fahrspur oder Soll-Fahrspur erstrecken. Diese Teilflächen müssen jeweils nicht den jeweiligen Teilbereichen entsprechen. Das bedeutet insbesondere, dass in einem Übergangsbereich der zu beleuchtenden Fläche die Teilbereiche sich nicht über die gesamte Breite der Ist-Fahrspur oder Soll-Fahrspur erstrecken müssen. Da im Übergangsbereich die zu beleuchtende Fläche von der Ist-Fahrspur auf die Soll-Fahrspur übergeht, kann dort die Ausgestaltung der zu beleuchtende Fläche so ausgestaltet sein, dass die Breite der zu beleuchtenden Fläche zwar der Breite der Ist-Fahrspur bzw. Soll-Fahrspur entspricht, jedoch die zu beleuchtende Fläche zur jeweiligen Fahrspur verschoben und/oder verdreht ist. Außerhalb des Übergangsbereichs der zu beleuchtenden Fläche liegt die zu beleuchtende Fläche vorzugsweise auf der Ist-Fahrspur oder Soll-Fahrspur und erstreckt sich jeweils über die gesamte Breite der Ist-Fahrspur bzw. Soll-Fahrspur.

Der Sensor zum Erfassen der Ist-Fahrspur kann unterschiedlich ausgestaltet sein. Der Sensor kann eine Kamera, ein Ultraschallsensor, ein Radarsensor, ein Laserscanner, ein Lidar-Sensor sowie auch ein Sensorsystem mit mehreren Sensoren sein. Damit kann der Sensor die Umgebung des Kraftfahrzeugs erfassen und daraus die Ist-Fahrspur ableiten. Der Sensor kann auch eine Datenschnittstelle beinhalten, womit der Sensor die Ist-Fahrspur von einer externen Einheit empfangen kann. Beispielsweise könnten auf der Fahrbahn entsprechende Beacons oder RFID-Chips verbaut sein, welche dem Sensor die Ist-Fahrspur als Information direkt übermitteln können. Anstelle eines Beacons oder RFID-Chips kann auch eine andersartig gestaltete Sensorik zum Übertragen der Ist-Fahrspur als Information an den Sensor eingesetzt werden.

Die zu beleuchtende Fläche hat entlang der Fahrtrichtung eine größere Ausdehnung als senkrecht zu ihr. Dabei sind die Richtung der Fahrspur und die Fahrtrichtung des Kraftfahrzeugs nicht unbedingt dasselbe. Bei einem Spurwechsel eines Kraftfahrzeugs verläuft die Fahrtrichtung des Kraftfahrzeugs zumindest zeitweise nicht parallel zu den jeweiligen Fahrspuren. Weist eine Fahrspur einen kurvenartigen Verlauf auf, so ist die Richtung dieser Fahrspur ebenfalls kurvenartig. Die Richtung des Kraftfahrzeugs folgt vornehmlich der Fahrspur selbst. Die zu beleuchtende Fläche weist zumindest zwei Teilbereiche auf, deren Flächenschwerpunkte auf der Ist-Fahrspur beziehungsweise Soll-Fahrspur liegen. Dabei ist insbesondere der erste Teilbereich näher an dem Kraftfahrzeug angeordnet als der zweite Teilbereich. Der erste Teilbereich liegt damit vorzugsweise weiter proximal als der zweite Teilbereich. Der zweite Teilbereich liegt damit insbesondere weiter distal. Zwar ist es möglich, dass der erste Teilbereich infinitesimale Flächenstücke aufweist, die vom Kraftfahrzeug weiter entfernt sind als andere infinitesimale Flächenstücke des zweiten Teilbereichs. Dabei beziehen sich die relativen Angaben zum Kraftfahrzeug auf einen Zeitpunkt, an dem das Kraftfahrzeug noch keinen Spurwechsel vollzogen hat und noch auf der Ist-Fahrspur befindlich ist Jedoch sind diese beiden Teilbereiche derart ausgestaltet, dass der erste Flächenschwerpunkt bevorzugt näher am Kraftfahrzeug angeordnet ist als der zweite Flächenschwerpunkt. Dies bedeutet, dass sich in der Regel der zweite Teilbereich weiter in Fahrtrichtung des Kraftfahrzeugs erstreckt als der erste Teilbereich. Dadurch kann eine Art "gebogener Lichtteppich" auf die Fahrbahn projiziert werden, der den Fahrer des Kraftfahrzeugs intuitiv von der Ist-Fahrspur zur Soll-Fahrspur leitet. Dem Fahrer wird also direkt im Blickfeld derjenige Spurverlauf angezeigt, welcher zur Realisierung seiner gewünschten Routenführung nötig ist. Er muss dazu seinen Blick nicht mehr von der Straße abwenden, um beispielsweise auf ein Navigationsgerät zu blicken. Da so notwendige Spurwechsel oder Ausfahrten direkt im Blickfeld des Fahrers angezeigt werden können, kann somit die Verkehrssicherheit erhöht werden.

Die Erfindung sieht vor, dass die zu beleuchtende Fläche einteilig ausgebildet ist. Mithilfe einer einteilig ausgebildeten zu beleuchtenden Fläche kann der Fahrer des Kraftfahrzeugs intuitiv von der Ist-Fahrspur zur Soll-Fahrspur geleitet werden. Damit können unnötige Irritationen minimiert beziehungsweise vermieden werden.

Gemäß der Erfindung umfasst der zweite Teilbereich mehr als 50 Prozent der zu beleuchtenden Fläche. Innerhalb des zweiten Teilbereichs befindet sich insbesondere der zweite Flächenschwerpunkt. Da bei einer Routenführung das Ziel, also in diesem Fall die Soll-Fahrspur, von besonderem Interesse ist, ist es vorteilhaft, die Soll-Fahrspur entsprechend hervorzuheben. Daher sieht diese Variante der Erfindung vor, dass der zweite Teilbereich einen Mindestanteil an der zu beleuchtenden Fläche aufweist. In dieser Variante muss der Flächenanteil des zweiten Teilbereichs an der zu beleuchtenden Fläche mehr als 50 Prozent betragen. Dies bedeutet entsprechend im Umkehrschluss, dass der Flächenanteil des ersten Teilbereichs weniger als 50 Prozent beträgt. Damit kann die Soll-Fahrspur für einen Fahrer klar und intuitiv hervorgehoben werden. Dem Fahrer kann dadurch der Weg zur Soll-Fahrspur intuitiv dargestellt werden und da der Flächenanteil des ersten Teilbereichs an der zu beleuchtenden Fläche begrenzt ist, kann seine Aufmerksamkeit kontinuierlich von der Ist-Fahrspur zur Soll-Fahrspur gelenkt werden.

Die einteilig zu beleuchtende Fläche führt von der Ist-Fahrspur zur Soll-Fahrspur und die beiden Fahrspuren sind nicht unmittelbar nebeneinander angeordnet. Eine solche Situation kann dann eintreten, wenn die Fahrbahn mehr als zwei Fahrspuren pro Fahrtrichtung aufweist. Dies kann beispielsweise in Großstädten und auf Autobahnen der Fall sein. Insbesondere an Autobahnkreuzen kann es notwendig sein, mehrere Fahrspurwechsel durchzuführen, um zur Soll-Fahrspur zu gelangen. In diesem Fall würden zwischen der Ist-Fahrspur und der Soll-Fahrspur weitere Fahrspuren liegen. Die einteilig zu beleuchtende Fläche führt in dieser Variante von der Ist-Fahrspur kontinuierlich und ohne Unterbrechungen zur Soll-Fahrspur. Dabei würde die einteilig zu beleuchtende Fläche eine oder mehrere dazwischen liegende Fahrspuren überqueren beziehungsweise überdecken. Dabei verläuft die zu beleuchtende Fläche auf der dazwischen liegenden Fahrspur insbesondere in eine Richtung, die nicht parallel zu der Fahrtrichtung der dazwischen liegenden Fahrspur ist. Das heißt, die zu beleuchtende Fläche kann als breiterer Lichtstreifen betrachtet werden, welcher bei der Ist-Fahrspur zunächst parallel in Richtung der Ist-Fahrspur verläuft, im Anschluss daran nach rechts oder links abbiegt, dann schräg zu der dazwischen liegenden Fahrspur verläuft und beim Erreichen der Soll-Fahrspur seine Ausrichtung kontinuierlich wieder ändert, sodass der Lichtstreifen parallel zur Richtung der Soll-Fahrspur ausgebildet ist. Mit anderen Worten weist die zu beleuchtende Fläche eine Mittellinie auf, welche im Bereich der dazwischen liegenden Fahrspur nicht parallel zur Richtung der dazwischen liegenden Fahrspur ist. Jedoch ist in dieser Variante der Erfindung im ersten und zweiten Teilbereich vorgesehen, dass die Mittellinie zumindest bereichsweise parallel zur Istbeziehungsweise Soll-Fahrspur verläuft. Der hier dargestellte Verlauf kann prinzipiell auch für den Fall angewendet werden, wenn die Ist- und Soll-Fahrspur direkt und unmittelbar nebeneinander angeordnet sind.

Gemäß der Erfindung ist der Sensor als Kamera ausgebildet und in der Lage, mittels einer Bildverarbeitung unterschiedliche Fahrbahnmarkierungen zu erkennen. Mithilfe unterschiedlicher Bildverarbeitungsmethoden wie zum Beispiel dem optischen Fluss, einer bewegungsbasierten Strukturerkennung oder weiteren Analysemethoden können Bilder, die von der Kamera generiert werden, hinsichtlich der Fahrbahnmarkierungen untersucht werden. Damit kann die Kamera oder die Steuereinheit die Ist-Fahrspur und die Soll-Fahrspur erkennen. Das heißt, die Bildverarbeitung kann insbesondere auch oder ausschließlich durch die Steuereinheit erfolgen. Darüber hinaus kann ebenfalls vorgesehen sein, dass neben den Fahrbahnmarkierungen weitere Elemente im Umgebungsbereich des Kraftfahrzeugs erfasst und erkannt werden. Solche Elemente können beispielsweise ein Verkehrsschild, eine Ampel, ein Fußgänger oder weitere Hindernisse sein.

Eine weitere Variante der vorliegenden Erfindung sieht vor, dass eine in der Fahrtrichtung gelegene Mittellinie, die innerhalb der zu beleuchtenden Fläche die zu beleuchtende Fläche in zwei gleich große Teilflächen aufteilt, differenzierbar ist. Ist die Mittellinie differenzierbar, so ist sie an jeder Stelle stetig und weist zugleich keinen Sprung auf. Die sich daraus ergebende beleuchtete Fläche führt kontinuierlich von der Ist-Fahrspur zur Soll-Fahrspur. Aufgrund der differenzierbaren Mittellinie ist in dieser Variante der Erfindung die zu beleuchtende Fläche an keiner Stelle unterbrochen oder geknickt. Die so berechnete zu beleuchtende Fläche kann auf einen Fahrer harmonischer wirken als eine Fläche, die plötzlich in eine andere Richtung abknickt. Dies kann dem Fahrer bei der Routenführung zusätzlich den nötigen Spurwechsel intuitiv veranschaulichen.

In einer weiteren Ausgestaltungsform der vorliegenden Erfindung ist die zu beleuchtende Fläche symmetrisch. Die zu beleuchtende Fläche ist insbesondere in Bezug auf ihre Mittellinie symmetrisch. Dabei ist die Mittellinie jedoch in der Regel keine Gerade, da sie von der Ist-Fahrspur zur Soll-Fahrspur führt. Die Mittellinie ist also insbesondere kurvenartig. Die zu beleuchtende Fläche kann jedoch auch insbesondere eine Punktsymmetrie aufweisen. Das heißt, innerhalb der zu beleuchtenden Fläche kann es einen Punkt gegeben, zu dem die zu beleuchtende Fläche punktsymmetrisch ist. Eine symmetrische oder punktsymmetrische zu beleuchtende Fläche kann von einem Fahrer besonders leicht wahrgenommen werden. Damit kann eine symmetrische oder punktsymmetrische zu beleuchtende Fläche zu einer erleichterten Routenführung für den Fahrer beitragen.

In einer weiteren Variante der vorliegenden Erfindung weist die zu beleuchtende Fläche einen Flächenschwerpunkt auf, der auf der Soll-Fahrspur liegt. Bei einer Routenführung ist in der Regel die Soll-Fahrspur wichtiger als die Ist-Fahrspur, da der Fahrer des Kraftfahrzeugs sein Ziel erreichen möchte. Um diesen Umstand entsprechend zu würdigen, kann es vorteilhaft sein, wenn die zu beleuchtende Fläche die Soll-Fahrspur stärker hervorhebt als die Ist-Fahrspur. Liegt der Gesamtflächenschwerpunkt der zu beleuchtenden Fläche auf der Soll-Fahrspur, so bedeutet dies, dass der Anteil der Soll-Fahrspur bei der zu beleuchtenden Fläche größer ist als der Anteil der Ist-Fahrspur. Das heißt, die zu beleuchtende Fläche erfasst in dieser Variante mehr Fläche von der Soll-Fahrspur als von der Ist-Fahrspur.

Eine weitere Variante der Erfindung sieht vor, dass der Flächenschwerpunkt des ersten Teilbereichs auf der Ist-Fahrspur liegt und der Flächenschwerpunkt des zweiten Teilbereichs auf der Soll-Fahrspur liegt. Damit kann die zu beleuchtende Fläche in zwei Teilbereiche aufgeteilt werden. Der erste Teilbereich liegt vornehmlich auf der Ist-Fahrspur, der zweite Teilbereich liegt vornehmlich auf der Soll-Fahrspur. Die zu beleuchtende Fläche kann insbesondere genau zwei Teilflächen aufweisen, welche zusammen die zu beleuchtende Fläche bilden. In diesem Spezialfall besteht die zu beleuchtende Fläche aus den beiden Teilbereichen. Dies bedeutet, dass in diesem Fall die beiden Teilbereiche, welche jeweils die Ist-Fahrspur und die Soll-Fahrspur repräsentieren, die zu beleuchtende Fläche zu 100 Prozent abbilden. Diese Ausgestaltungsform ist besonders dann vorteilhaft, wenn die Ist-Fahrspur unmittelbar an die Soll-Fahrspur angrenzt. In diesem Fall macht es Sinn, die zu beleuchtende Fläche ausschließlich auf die Ist-Fahrspur beziehungsweise Soll-Fahrspur zu beschränken.

Die Steuereinheit kann insbesondere dazu ausgebildet sein, die zu beleuchtende Fläche in Abhängigkeit von dynamischen Verkehrszeichen zu berechnen. Möchte beispielsweise ein Fahrer eines Kraftfahrzeugs vor dem Erreichen einer Ampel einen Spurwechsel durchführen, so berücksichtigt die Steuereinhei erfindungsgemäß den Status der Ampel bei der Berechnung der zu beleuchtenden Fläche. Würde beispielsweise die Ampel von Grün auf Rot umschalten, so könnte die Steuereinheit die zu beleuchtende Fläche derart berechnen, dass sie vor der Ampel endet. Damit kann verhindert werden, dass der Fahrer nicht aus Versehen die rote Ampel übersieht. Dieses Beispiel kann analog auf ein stationäres Verkehrszeichen, zum Beispiel ein Stoppschild, einen Zebrastreifen oder bei plötzlich auftauchenden Hindernissen, wie zum Beispiel einem spielenden Kind, übertragen werden. Bei all diesen Szenarien kann die Steuereinheit mithilfe der Kamera einen potentiellen Haltepunkt erkennen beziehungsweise verifizieren und diese Tatsache bei der Berechnung der zu beleuchtenden Fläche entsprechend berücksichtigen. Dabei ist insbesondere vorgesehen, dass bei einem verifizierten Haltepunkt die zu beleuchtende Fläche nicht in Fahrtrichtung über den Haltepunkt hinausragt.

In einer weiteren Variante der Erfindung ist die Steuereinheit ausgebildet, Offsetwerte auf Parameter einer Lichtverteilung für das Berechnen der zu beleuchtenden Fläche zu addieren. Dabei werden die Offsetwerte insbesondere auf Eckpunkte der Spurlichtparameter addiert, um die zu beleuchtende Fläche zu erzeugen. Insbesondere ist die Ausgangslichtverteilung, bevor die zu beleuchtende Fläche berechnet wird, ein Spurlicht. Das Spurlicht ist in der Regel als ein Rechteck mit variabler Länge und der Breite einer Fahrspur gegeben. Durch die Addition von Offsetwerten auf diese Art von Lichtverteilung können Teile des Spurlichts nach rechts beziehungsweise links verschoben werden. Dadurch kann das Spurlicht in die zu beleuchtende Fläche überführt werden.

In einer weiteren Variante der Erfindung ist vorgesehen, dass die Offsetwerte einer Entfernung zum Kraftfahrzeug zugeordnet sind und die Offsetwerte in Abhängigkeit von der Entfernung zum Kraftfahrzeug ermittelt werden, um eine kontinuierliche zu beleuchtende Fläche ausgehend von der Ist-Fahrspur zur Soll-Fahrspur zu berechnen. Damit kann ein Lichtstreifen, der die Breite einer Fahrspur aufweist, so dargestellt werden, dass dieser kontinuierlich, das heißt ohne Unterbrechungen und abrupte Übergänge, von der Ist-Fahrspur zur Soll-Fahrspur führt. Je weiter die Lichtverteilung, in diesem Beispiel das Spurlicht (rechteckiger Lichtteppich), vom Kraftfahrzeug entfernt ist, desto höher sind die Offsetwerte. Die Offsetwerte sind dabei insbesondere auf die Ausgangslichtverteilung, in der Regel dem Spurlicht, bezogen. Das heißt, die Offsetwerte beziehen sich in der Regel auf die Ist-Fahrspur. Sie sind vorzugsweise auch in ihrem Betrag beschränkt, damit die resultierende Lichtverteilung, also die zu beleuchtende Fläche, zur Soll-Fahrspur führt und nicht darüber hinaus weitere uninteressante Fahrspuren erfasst. Ein Offsetwert von 0 zum Beispiel wäre dem Spurlicht zugeordnet, das sich komplett auf der Ist-Fahrspur befindet. Ein Offsetwert von 1 zum Beispiel könnte bedeuten, dass ein entsprechender Punkt der Lichtverteilung um exakt eine Fahrspurbreite nach rechts verschoben wird. In Fahrtrichtung ausgehend von der Ist-Fahrspur würden die Offsetwerte insbesondere kontinuierlich von 0 nach 1 zunehmen. Die daraus resultierende zu beleuchtende Fläche würde von der Ist-Fahrspur zur Soll-Fahrspur führen, die unmittelbar rechts neben der Ist-Fahrspur angeordnet wäre. Eine Überführung auf eine Soll-Fahrspur links von der Ist-Fahrspur könnte in diesem Beispiel mit negativen Offsetwerten erreicht werden.

Die vorliegende Erfindung stellt ebenfalls ein Kraftfahrzeug mit einer Lichtprojektionsvorrichtung bereit. Die genannten Vorteile und Beispiele der vorangegangenen Varianten gelten sinngemäß auch für diese Ausführungsform der vorliegenden Erfindung.

Die vorliegende Erfindung stellt ebenfalls ein Verfahren zur Unterstützung bei einer Routenführung für ein Kraftfahrzeug mit einem Navigationssystem, einem Sensor, der als Kamera ausgeführt ist, und einer Projektionseinheit bereit. Dabei wird in einem Schritt a) eine Ist-Fahrspur, auf der sich das Kraftfahrzeug momentan befindet, mittels des Sensors erfasst. Im Schritt b) wird durch ein Navigationssystem eine von der Ist-Fahrspur verschiedene Soll-Fahrspur für die Routenführung bereitgestellt. Eine zu beleuchtende Fläche wird in Abhängigkeit von der Ist-Fahrspur und Soll-Fahrspur in einem Schritt c) berechnet. Dabei weist die zu beleuchtende Fläche entlang einer Fahrtrichtung des Kraftfahrzeugs eine größere Ausdehnung auf als senkrecht zu dieser Fahrtrichtung. Die zu beleuchtende Fläche weist ferner einen ersten Teilbereich mit einem ersten Flächenschwerpunkt auf, der auf der Ist-Fahrspur liegt. Dabei erstreckt sich der erste Teilbereich über eine gesamte Breite der Ist-Fahrspur. Die zu beleuchtende Fläche weist ferner einen zweiten Teilbereich und einen zweiten Flächenschwerpunkt auf, der auf der Soll-Fahrspur liegt. Der zweite Teilbereich erstreckt sich über eine gesamte Breite der Soll-Fahrspur. Bei einem Schritt e) wird Licht auf die zu beleuchtende Fläche projiziert. Erfindungsgemäß ist vorgesehen, dass der zweite Teilbereich mehr als 50% der zu beleuchtenden Fläche umfasst, in Schritt a) zusätzlich ein Erkennen unterschiedlicher Fahrbahnmarkierungen und einer Ampel in einem Umgebungsbereich des Kraftfahrzeugs erfolgt, und in Schritt c) die zu beleuchtende Fläche bei einem Spurwechsel vor einem Erreichen der Ampel in Abhängigkeit von einem Status der Ampel berechnet wird. Die genannten Vorteile und Beispiele der vorangegangenen Varianten gelten sinngemäß auch für das erfindungsgemäße Verfahren.

Die vorliegende Erfindung wird nun anhand der beigefügten Zeichnungen näher erläutert. Dabei zeigen:
- Fig. 1: eine schematische Draufsicht auf ein Kraftfahrzeug mit einer Lichtprojektionsvorrichtung und deren Komponenten;
- Fig. 2: eine schematische Darstellung zur Gegenüberstellung eines Spurlichts (links) und einer zu beleuchtenden Fläche (rechts); und
- Fig. 3: eine schematische Darstellung einer zu beleuchtenden Fläche bei einem mehrfachen Spurwechsel.

Bei den im Folgenden erläuterten Beispielen stellen die beschriebenen Komponenten der Ausführungsformen jeweils einzelne, unabhängig voneinander zu betrachtende Merkmale der Erfindung dar, welche die Erfindung jeweils auch unabhängig voneinander weiterbilden und damit auch einzeln oder in einer anderen als der gezeigten Kombination als Bestandteil der Erfindung anzusehen sind. Des Weiteren sind die beschriebenen Beispiele auch durch weitere der bereits beschriebenen Merkmale der Erfindung ergänzbar.

In den Figuren sind funktionsgleiche Elemente jeweils mit denselben Bezugszeichen versehen.

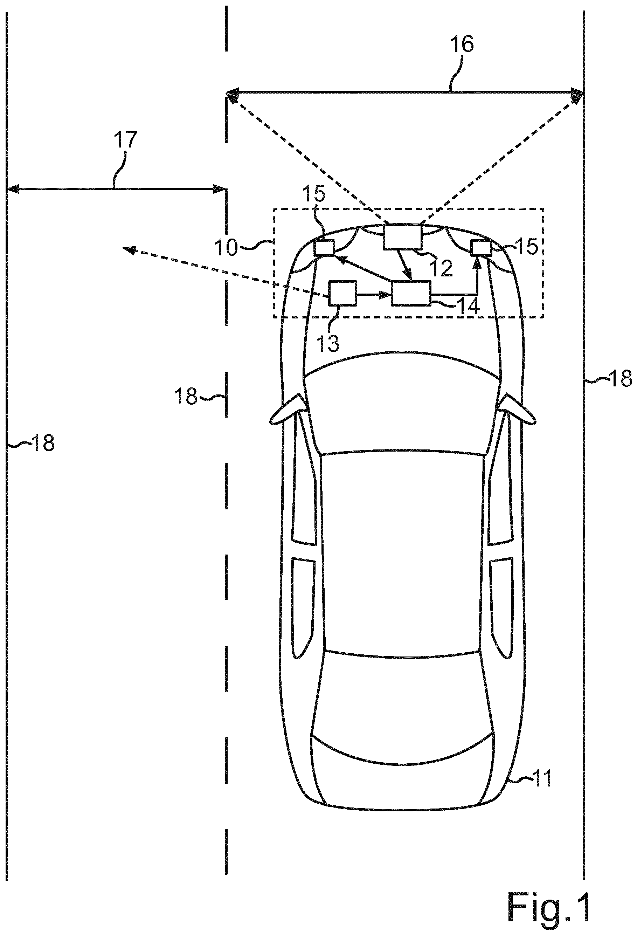

Fig. 1 zeigt beispielhaft ein Kraftfahrzeug 11, welches sich auf einer Ist-Fahrspur 16 befindet. Links neben der Ist-Fahrspur 16 ist unmittelbar im Anschluss an die Ist-Fahrspur 16 eine Soll-Fahrspur 17 angeordnet. Diese beiden Fahrspuren sind jeweils durch entsprechende Fahrbahnmarkierungen 18 gekennzeichnet beziehungsweise voneinander getrennt. Das Kraftfahrzeug 11 weist eine Lichtprojektionsvorrichtung 10 auf. Die Lichtprojektionsvorrichtung 10 befindet sich im Beispiel von Fig. 1 im vorderen Fahrzeugbereich. Idealerweise ist die Lichtprojektionsvorrichtung 10 in der Nähe der Scheinwerfer angeordnet beziehungsweise direkt in die Scheinwerfer integriert. Die Lichtprojektionsvorrichtung 10 weist ein Navigationssystem 13, eine Steuereinheit 14, eine Projektionseinheit 15 sowie einen Sensor 12 auf. Der Sensor 12 dient vornehmlich dem Erfassen der aktuellen Ist-Fahrspur 16. Ist der Sensor 12 als Kamera ausgeführt, so kann die Kamera entsprechend Bilder von der Ist-Fahrspur 16 und bei Bedarf auch von der Soll-Fahrspur 17 machen. Darüber hinaus kann die Kamera weitere Objekte in einer Umgebung des Kraftfahrzeugs 11 anhand der aufgenommenen Bilder erfassen und mit Hilfe einer entsprechenden Bildverarbeitung können Objekte in einer Umgebung des Kraftfahrzeugs 11 erkannt werden. Mit Hilfe eines faltenden neuronalen Netzwerks kann die Kamera oder Steuereinheit auch eine Objektart des erfassten Objekts ermitteln.

Anhand der aufgenommenen Bilder sowie der bekannten Position der Kamera kann entsprechend mittels einer Bildverarbeitung die Ist-Fahrspur 16 eindeutig ermittelt werden. In diesem Fall sind beispielhaft ausgehend von dem Sensor 12 zwei gestrichelte Pfeile angedeutet, die jeweils nach links und nach rechts verlaufen. Sie führen jeweils zu der Fahrbahnmarkierung 18, welche die Ist-Fahrspur begrenzt und auszeichnet. In diesem Fall erfasst der Sensor 12 die linke beziehungsweise rechte Fahrbahnmarkierung 18 ausgehend vom Kraftfahrzeug 11. Die sich daraus ergebende Fahrspur kann die Steuereinheit 14 im Anschluss eindeutig als die Ist-Fahrspur 16 identifizieren. Das Erkennen der Ist-Fahrspur 16 kann je nach Ausführungsform sowohl durch den Sensor 12 als auch durch die Steuereinheit 14 erfolgen.

Im Falle einer Navigation beziehungsweise einer Routenführung sind Spurwechsel häufig erforderlich. Das Navigationssystem 13 stellt in diesem Beispiel fest, dass die Soll-Fahrspur 17 links von der Ist-Fahrspur 16 angeordnet ist. Ein Fahrer des Kraftfahrzeugs 11 hat idealerweise vor Beginn der Autofahrt eine Zieladresse in das Navigationssystem 13 eingegeben. Das Navigationssystem 13 kann anhand der aktuellen Position des Kraftfahrzeugs 11 sowie des eingegebenen Ziels durch den Fahrer die Soll-Fahrspur 17 ermitteln. Die Steuereinheit 14 erhält von dem Sensor 12 als Information die aktuelle Ist-Fahrspur 16 und von dem Navigationssystem 13 als Information die zu erreichende Soll-Fahrspur 17. Diese beiden Informationen werden der Steuereinheit 14 übermittelt, die diese Informationen zur Berechnung einer zu beleuchtenden Fläche BF berücksichtigt.

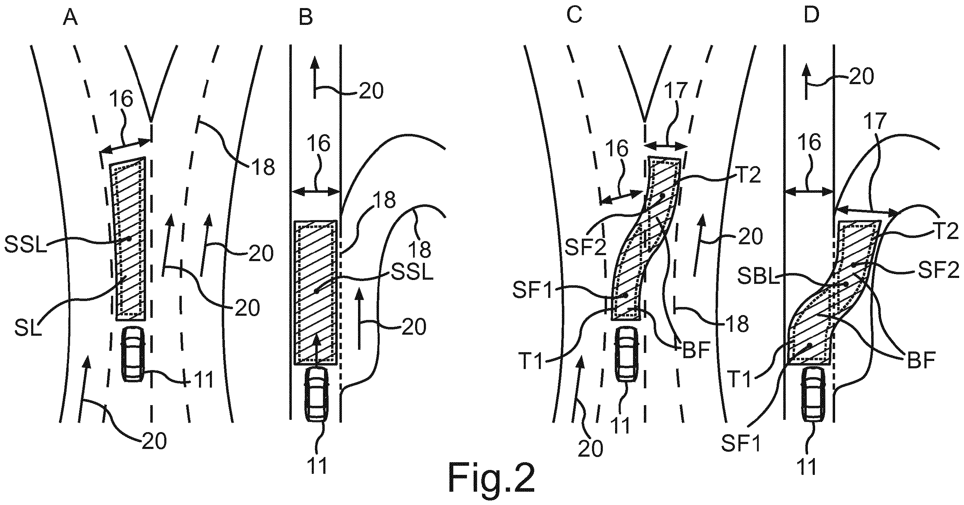

In Fig. 2 sind beispielhaft mehrere zu beleuchtende Flächen BF dargestellt. Dabei zeigen die Fig. A und B jeweils die Funktion eines Spurlichts SL, die Fig. C und D zeigen beispielhafte Ausführungsformen der beleuchteten Fläche BF. Das Spurlicht SL ist in Fahrtrichtung 20 vor dem Kraftfahrzeug 11 angeordnet. Das Spurlicht SL ist ausschließlich auf der Ist-Fahrspur 16 angeordnet. Es umfasst insbesondere die Breite der Ist-Fahrspur 16 und kann eine variable Länge aufweisen. Ein Schwerpunkt SSL dieses Spurlichts SL ist genau in der Mitte angeordnet. In Fig. C und D umfasst die zu beleuchtende Fläche BF neben der Ist-Fahrspur 16 zusätzlich noch die Soll-Fahrspur 17. Die zu beleuchtende Fläche BF kann auch als Routenlicht bezeichnet werden. Die zu beleuchtende Fläche BF beziehungsweise das Routenlicht beginnen, wie in den Fig. 2A oder 2B gezeigt, in einem Bereich vor dem Kraftfahrzeug 11. Beispielsweise kann die zu beleuchtende Fläche BF in einem Bereich von etwa 1 bis 5 Meter in Fahrtrichtung 20 vor dem Kraftfahrzeug 11 beginnen. Die zu beleuchtende Fläche BF weist in den Beispielen C und D zwei Teilbereiche T1 und T2 auf. Der erste Teilbereich T1 ist auf der Ist-Fahrspur 16 angeordnet, der zweite Teilbereich T2 auf der Soll-Fahrspur 17. Dabei ist ein Flächenschwerpunkt SF1 des ersten Teilbereichs T1 auf der Ist-Fahrspur 16 angeordnet und ein Flächenschwerpunkt SF2 des zweiten Teilbereichs T2 auf der Soll-Fahrspur 17.

In der Fig. C sind beide Teilbereiche T1 und T2 in etwa gleich groß. Der zweite Teilbereich T2 weist eine etwas größere Fläche auf als der erste Teilbereich T1. Im Beispiel D der Fig. 2 ist dagegen der zweite Teilbereich T2 deutlich größer ausgebildet als der erste Teilbereich T1. Im Beispiel D soll das Kraftfahrzeug 11 auf die als Ausfahrt ausgestaltete Soll-Fahrspur 17 wechseln. Um die Soll-Fahrspur 17 gegenüber der Ist-Fahrspur 16 stärker zu betonen, ist hier der erste Teilbereich T1 deutlich kleiner als der zweite Teilbereich T2 ausgebildet. Jeder dieser Teilbereiche hat einen eigenen Flächenschwerpunkt SF1 beziehungsweise SF2. Der erste Flächenschwerpunkt SF1 liegt auf der Ist-Fahrspur 16, der zweite Flächenschwerpunkt SF2 liegt auf der Soll-Fahrspur 17. Die zu beleuchtende Fläche BF im Beispiel D der Fig. 2 weist einen Gesamtflächenschwerpunkt SBL auf, der ebenfalls wie der Flächenschwerpunkt SF2 des zweiten Teilbereichs auf der Soll-Fahrspur 17 liegt.

Im Gegensatz zum Beispiel C der Fig. 2 knickt im Beispiel D der Fig. 2 die zu beleuchtende Fläche BF ausgehend von der Ist-Fahrspur 16 stärker nach rechts ab, um rasch auf die Soll-Fahrspur 17 zu führen. Das heißt, die zu beleuchtende Fläche BF verläuft zunächst parallel in Richtung der Ist-Fahrspur 16, knickt darauf nach rechts ab, um von der Ist-Fahrspur 16 auf die Soll-Fahrspur 17 zu gelangen. In Fahrtrichtung 20 auf Höhe des Gesamtflächenschwerpunkts SBL ist die zu beleuchtende Fläche BF auf der Soll-Fahrspur 17 vollständig abgebildet. Das heißt, ab dem Gesamtflächenschwerpunkt SBL in Fahrtrichtung 20 umfasst die zu beleuchtende Fläche BF die gesamte Breite der Soll-Fahrspur 17. Zwischen dem Gesamtflächenschwerpunkt SBL und dem Kraftfahrzeug 11 umfasst die zu beleuchtende Fläche BF nicht die komplette Breite der Soll-Fahrspur 17. Trotz des stärkeren Übergangs im Beispiel D von Fig. 2 im Vergleich zu Beispiel C ist die zu beleuchtende Fläche BF kontinuierlich ausgebildet. Die zu beleuchtende Fläche BF ist vorzugsweise als gekrümmter breiter Lichtstreifen ausgebildet. Anstelle wie in den Beispielen A und B der Fig. 2 kann im Rahmen dieser Erfindung der Lichtstreifen derart abgeändert werden, sodass ein gebogener beziehungsweise gekrümmter Lichtstreifen entsteht, der kontinuierlich von der Ist-Fahrspur 16 zur Soll-Fahrspur 17 führt. Dabei wird vorzugsweise die Soll-Fahrspur 17 dadurch hervorgehoben, indem der zweite Teilbereich T2 größer ausgebildet ist als der erste Teilbereich T1.

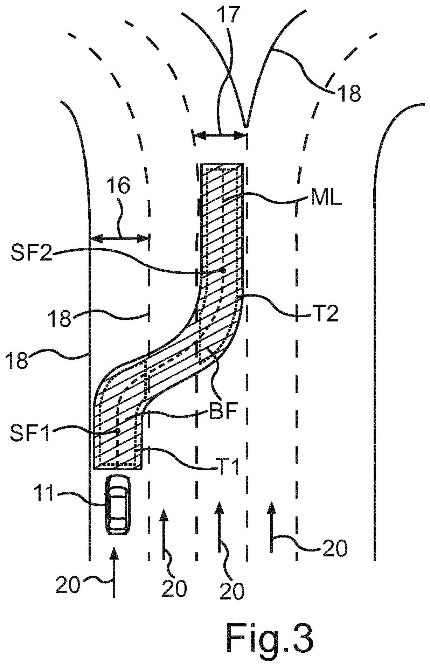

In Fig. 3 ist ein Beispiel gezeigt, in dem das Kraftfahrzeug 11 einen mehrfachen Spurwechsel durchführen möchte. Auch in diesem Fall erkennt der Sensor 12 anhand der Fahrbahnmarkierungen 18 die Ist-Fahrspur 16 sowie die Soll-Fahrspur 17. Im Unterschied zur Fig. 2 sind in Fig. 3 die Ist-Fahrspur 16 und die Soll-Fahrspur 17 nicht unmittelbar nebeneinander angeordnet, sondern durch eine weitere Fahrspur zwischen diesen beiden getrennt. Auch in diesem Fall ist der erste Teilbereich T1 auf der Ist-Fahrspur 16 und der zweite Teilbereich T2 auf der Soll-Fahrspur 17 angeordnet. Jedoch sind hier diese beiden Teilbereiche T1 und T2 nicht unmittelbar miteinander verbunden. Die zu beleuchtende Fläche BF verläuft auf direktem Weg von dem ersten Teilbereich T1 zu dem zweiten Teilbereich T2. Das Routenlicht beziehungsweise die zu beleuchtende Fläche BF verläuft im Bereich der dazwischen liegenden Fahrspur tendenziell schräg beziehungsweise diagonal. Der Verlauf der zu beleuchtenden Fläche BF ist im Beispiel der Fig. 3 durch eine Mittellinie ML angedeutet.

Die Mittellinie ML verläuft mittig durch die zu beleuchtende Fläche und teilt diese in zwei große Teile auf. Sie verläuft insbesondere durch die beiden Flächenschwerpunkte SF1 und SF2 der beiden Teilbereiche T1 und T2. Anhand der Mittellinie ML ist deutlich zu sehen, dass sie im Bereich der dazwischenliegenden Fahrspur schräg verläuft. Die Mittellinie ML ist daher insbesondere nicht zur Richtung der dazwischen liegenden Fahrspur 20 parallel. Im Beispiel der Fig. 3 erkennt das Navigationssystem 13 die Anzahl der Fahrspuren sowie die Existenz einer Ausfahrt oder Abzweigung und übermittelt diese Daten der Steuereinheit 14. Ein als Kamera ausgeführter Sensor 12 erkennt im Beispiel der Fig. 3, dass das Kraftfahrzeug 11 auf der äußersten linken Spur, der Ist-Fahrspur 16, angeordnet ist. Mithilfe einer entsprechenden Bildverarbeitung kann die Kamera Eigenschaften der Fahrbahnmarkierung 18 erkennen. Insbesondere kann sie erkennen, ob die Fahrbahnmarkierung 18 durchgezogen oder gestrichelt ist. Des Weiteren kann auch die laterale Entfernung zum Kraftfahrzeug 11 sowie die Krümmung der Fahrbahnmarkierung 18 festgestellt werden. Die Bildverarbeitung kann sowohl durch die Kamera als auch durch die Steuereinheit 14 erfolgen. Die Kamera kann jedoch auch nur Bildinformationen der Steuereinheit 14 übermitteln, wobei die Steuereinheit 14 die Bildverarbeitung ausführt. Dabei werden die von dem Sensor 12 und dem Navigationssystem 13 bereitgestellten Informationen insbesondere mittels einer BUS-Technologie, zum Beispiel mittels eines CAN-Netzwerks, zur Steuereinheit 14 übertragen. Anhand all dieser Informationen kann die Steuereinheit 14 die Ist-Fahrspur 16 sowie die Soll-Fahrspur 17 bestimmen. Darauf basierend kann die zu beleuchtende Fläche BF berechnet werden. Dies geschieht beispielsweise durch eine Addition von Offsetwerten, die auf Eckpunkte der Spurlichtparameter addiert werden. Anhand der vom Sensor 12 und dem Navigationssystem 13 übermittelten Informationen kann die Steuereinheit 14 die zu beleuchtende Fläche BF bestimmen und entsprechend die Projektionseinheit 15 ansteuern. Die Projektionseinheit 15 kann als hochauflösender Scheinwerfer zur Umsetzung einer hochauflösenden Lichtverteilung ausgeführt sein.

Die genannten Beispiele und Ausführungen zeigen, wie die Funktion des Spurlichts SL um eine weitere Lichtfunktion angereichert werden kann. Mithilfe dieser Erfindung kann das Spurlicht SL in ein Routenlicht transformiert werden. Das Routenlicht als die zu beleuchtende Fläche BF zeigt einem Fahrer des Kraftfahrzeugs 11 intuitiv einen notwendigen Spurwechsel von der Ist-Fahrspur 16 auf die Soll-Fahrspur 17, um einer gewünschten Route zu folgen. Damit können notwendige Spurwechsel oder Ausfahrten durch eine entsprechende Anpassung der Lichtverteilung anschaulicher dargestellt werden. Dabei kann das Routenlicht die notwendigen Informationen für die Routenführung intuitiv auf der Fahrbahn darstellen. Der Fahrer des Kraftfahrzeugs 11 muss seinen Blick nicht von der Straße abwenden und wird somit durch das Routenlicht, also durch die zu beleuchtende Fläche BF, bei der Navigation unterstützt.

## Patentansprüche

1. Lichtprojektionsvorrichtung (10) für ein Kraftfahrzeug (11) zur Unterstützung bei einer Routenführung mit,
- einem Sensor (12) zum Erfassen einer Ist-Fahrspur (16), auf der sich das Kraftfahrzeug (10) momentan befindet, wobei der Sensor (12) als Kamera ausgebildet ist,
- einem Navigationssystem (13) zum Bereitstellen einer von der Ist-Fahrspur (16) verschiedenen Soll-Fahrspur (17) für die Routenführung,
- einer Steuereinheit (14), welche anhand der Ist-Fahrspur (16) und der Soll-Fahrspur (17) eine zu beleuchtende Fläche (BF) berechnet, wobei die zu beleuchtende Fläche (BF) entlang einer Fahrtrichtung (20) des Kraftfahrzeug eine größere Ausdehnung aufweist als senkrecht zu der Fahrtrichtung (20) und die zu beleuchtende Fläche (BF) einen ersten Teilbereich (T1) mit einem ersten Flächenschwerpunkt (SF1) aufweist, der auf der Ist-Fahrspur (16) liegt, wobei der erste Teilbereich (T1) sich über eine gesamte Breite der Ist-Fahrspur (16) erstreckt und die zu beleuchtende Fläche (BF) einen zweiten Teilbereich (T2) mit einem zweiten Flächenschwerpunkt (SF2) aufweist, der auf der Soll-Fahrspur (17) liegt, wobei der zweite Teilbereich (T2) sich über eine gesamte Breite der Soll-Fahrspur (17) erstreckt,
- einer Projektionseinheit (15), welche entsprechend auf der von der Steuereinheit (14) berechneten zu beleuchtenden Fläche (BF) Licht projiziert, wobei
- die zu beleuchtende Fläche (BF) einteilig ausgebildet ist und
- die einteilig zu beleuchtende Fläche (BF) von der Ist-Fahrspur (16) zur Soll-Fahrspur (17) führt und die beiden Fahrspuren (16, 17) nicht unmittelbar nebeneinander angeordnet sind,
**dadurch gekennzeichnet, dass**
- der zweite Teilbereich (T2) mehr als 50% der zu beleuchtenden Fläche (BF) umfasst,
- der Sensor (12) in der Lage ist, mittels einer Bildverarbeitung unterschiedliche Fahrbahnmarkierungen (18) und eine Ampel im Umgebungsbereich des Kraftfahrzeugs (11) zu erkennen, und die Steuereinheit ausgebildet ist, und
- bei einem Spurwechsel vor einem Erreichen der Ampel einen Status der Ampel beim Berechnen der zu beleuchtenden Fläche (BF) zu berücksichtigen.

2. Lichtprojektionsvorrichtung (10) nach Anspruch 1, wobei eine in der Fahrtrichtung (20) gelegene Mittellinie (ML), die innerhalb der zu beleuchtenden Fläche (BF) die zu beleuchtende Fläche (BF) in zwei gleich große Teilflächen aufteilt, differenzierbar ist.

3. Lichtprojektionsvorrichtung (10) nach einem der vorhergehenden Ansprüche, wobei die zu beleuchtende Fläche (BF) symmetrisch ist.

4. Lichtprojektionsvorrichtung (10) nach einem der vorhergehenden Ansprüche, wobei die Steuereinheit (12) ausgebildet ist, Offsetwerte auf Parameter einer Lichtverteilung für das Berechnen der zu beleuchtenden Fläche (BF) zu addieren.

5. Lichtprojektionsvorrichtung (10) nach Anspruch 4, wobei die Offsetwerte einer Entfernung zum Kraftfahrzeug (11) zugeordnet sind und die Offsetwerte in Abhängigkeit von der Entfernung zum Kraftfahrzeug (11) ermittelt werden, um eine kontinuierliche zu beleuchtende Fläche (BF) ausgehend von der Ist-Fahrspur (16) zur Soll-Fahrspur (17) zu berechnen.

6. Kraftfahrzeug (11) mit einer Lichtprojektionsvorrichtung (10) nach einem der vorhergehenden Ansprüche.

7. Verfahren zur Unterstützung bei einer Routenführung für ein Kraftfahrzeug (11) mit einem Navigationssystem (13), einem Sensor (12), der als Kamera ausgeführt ist, und einer Projektionseinheit (15) durch Ausführen folgender Verfahrensschritte:
a) Erfassen einer Ist-Fahrspur (16), auf der sich das Kraftfahrzeug (11) momentan befindet mittels des Sensors (12),
b) Bereitstellen einer von der Ist-Fahrspur (16) verschiedenen Soll-Fahrspur (17) für die Routenführung durch ein Navigationssystem (13),
c) Berechnen einer zu beleuchtenden einteiligen Fläche (BF) in Abhängigkeit von der Ist-Fahrspur (16) und Soll-Fahrspur (17), wobei die zu beleuchtende einteilige Fläche (BF) entlang einer Fahrtrichtung (20) des Kraftfahrzeug (11) eine größere Ausdehnung aufweist als senkrecht zu der Fahrtrichtung (20) und die zu beleuchtende einteilige Fläche (BF) einen ersten Teilbereich (T1) mit einem ersten Flächenschwerpunkt (SF1) aufweist, der auf der Ist-Fahrspur (16) liegt, wobei der erste Teilbereich (T1) sich über eine gesamte Breite der Ist-Fahrspur (16) erstreckt und die zu beleuchtende einteilige Fläche (BF) einen zweiten Teilbereich (T2) mit einem zweiten Flächenschwerpunkt (SF2) aufweist, der auf der Soll-Fahrspur (17) liegt, wobei der zweite Teilbereich (T2) sich über eine gesamte Breite der Soll-Fahrspur (17) erstreckt, und die einteilig zu beleuchtende Fläche (BF) von der Ist-Fahrspur (16) zur Soll-Fahrspur (17) führt und die beiden Fahrspuren (16, 17) nicht unmittelbar nebeneinander angeordnet sind,
e) Projizieren von Licht auf die zu beleuchtende einteilige Fläche (BF), **dadurch gekennzeichnet, dass**
- der zweite Teilbereich (T2) mehr als 50% der zu beleuchtenden Fläche (BF) umfasst,
- in Schritt a) zusätzlich ein Erkennen unterschiedlicher Fahrbahnmarkierungen (18) und einer Ampel in einem Umgebungsbereich des Kraftfahrzeugs (11) erfolgt, und
- in Schritt c) die zu beleuchtende Fläche (BF) bei einem Spurwechsel vor einem Erreichen der Ampel in Abhängigkeit von einem Status der Ampel berechnet wird.

## Claims

1. Light projection device (10) for a motor vehicle (11) for support in a route guidance having:
- a sensor (12) for detecting an actual lane (16) in which the motor vehicle (10) is currently situated, wherein the sensor (12) is in the form of a camera,
- a navigation system (13) for preparing a target lane (17), different from the actual lane (16), for the route guidance,
- a control unit (14) which calculates on the basis of the actual lane (16) and the target lane (17) an area to be illuminated (BF), wherein the area to be illuminated (BF) has a greater expansion along a direction of travel (20) of the motor vehicle than perpendicularly to the direction of travel (20) and the area to be illuminated (BF) has a first partial region (T1) with a first area centre (SF1) which is situated in the actual lane (16), wherein the first partial region (T1) extends across a total width of the actual lane (16) and the area to be illuminated (BF) has a second partial region (T2) having a second area centre (SF2) which lies on the target lane (17), wherein the second partial region (T2) extends across a total width of the target lane (17),
- a projection unit (15) which projects light correspondingly on the area to be illuminated (BF) calculated by the control unit (14), wherein
- the area to be illuminated (BF) is configured in one piece and
- the area to be illuminated (BF) in one piece leads from the actual lane (16) to the target lane (17) and the two lanes (16, 17) are not arranged directly adjacent to one another,
**characterised in that**
- the second partial region (T2) comprises more than 50% of the surface to be illuminated (BF),
- the sensor (12) is able to detect, by means of an image processing, different road markings (18) and a set of traffic lights in the vicinity of the motor vehicle (11), and the control unit is configured, and,
- in the case of a change of lane prior to reaching the traffic lights, to take into consideration a status of the traffic lights when calculating the area to be illuminated (BF).

2. Light projection device (10) according to claim 1, wherein a midline (ML) situated in the direction of travel (20) can be differentiated which, within the area to be illuminated (BF), divides the area to be illuminated (BF) into two partial areas of equal size.

3. Light projection device (10) according to any of the preceding claims, wherein the area to be illuminated (BF) is symmetrical.

4. Light projection device (10) according to any of the preceding claims, wherein the control unit (12) is configured to add offset values to parameters of a light distribution for the calculation of the area to be illuminated (BF).

5. Light projection device (10) according to claim 4, wherein the offset values are assigned to a distance from the motor vehicle (11) and the offset values are determined as a function of the distance from the motor vehicle (11), in order to calculate a continuous area to be illuminated (BF) starting from the actual lane (16) to the target lane (17).

6. Motor vehicle (11) having a light projection device (10) according to any of the preceding claims.

7. Method for supporting a route guidance for a motor vehicle (11) having a navigation system (13), a sensor (12), which is in the form of a camera, and a projection unit (15), by carrying out the following steps:
a) detecting an actual lane (16), in which the motor vehicle (11) is currently located, by means of the sensor (12),
b) providing a target lane (17) different from the actual lane (16) for the route guidance on the part of the navigation system (13),
c) calculating an area to be illuminated (BF) in one piece as a function of the actual lane (16) and target lane (17), wherein the area to be illuminated (BF) in one piece has a greater expansion along a direction of travel (20) of the motor vehicle (11) than perpendicularly to the direction of travel (20) and the area to be illuminated (BF) in one piece has a first partial area (T1) with a first area centre (SF1), which is located in the actual lane (16), wherein the first partial area (T1) extends across an entire width of the actual lane (16) and the surface to be illuminated (BF) in one piece has a second partial area (T2) with a second area centre (SF2) which is located in the target lane (17), wherein the second partial area (T2) extends across an entire width of the target lane (17), and the surface to be illuminated (BF) in one piece leads from the actual lane (16) to the target lane (17) and the two lanes (16, 17) are not arranged directly adjacent to one another,
e) projecting light onto the area to be illuminated (BF) in one piece,
**characterised in that**
- the second partial area (T2) comprises more than 50% of the area to be illuminated (BF),
- in step a) additionally a detection takes place of different road markings (18) and a set of traffic lights in a vicinity of the motor vehicle (11), and
- in step c) the area to be illuminated (BF) during a change of lane is calculated prior to reaching the traffic lights depending on a status of the traffic lights.

## Revendications

1. Dispositif de projection de lumière (10) destiné à un véhicule automobile (11) pour assister un guidage routier avec
- un capteur (12) pour détecter une voie effective (16), sur laquelle se trouve actuellement le véhicule automobile (10), dans lequel le capteur (12) est formé en tant que caméra,
- un système de navigation (13) pour fournir une voie cible (17) différente de la voie effective (16) pour le guidage routier,
- une unité de commande (14), laquelle calcule une surface à éclairer (BF) à partir de la voie effective (16) et de la voie cible (17), dans lequel la surface à éclairer (BF) présente le long d'une direction de déplacement (20) du véhicule automobile une plus grande extension que perpendiculairement à la direction de déplacement (20) et la surface à éclairer (BF) présente une première zone partielle (T1) avec un premier centroïde (SF1), qui se situe sur la voie effective (16), dans lequel la première zone partielle (T1) s'étend sur toute une largeur de la voie effective (16) et la surface à éclairer (BF) présente une seconde zone partielle (T2) avec un second centroïde (SF2), qui se situe sur la voie cible (17), dans lequel la seconde zone partielle (T2) s'étend sur toute une largeur de la voie cible (17),
- une unité de projection (15), laquelle projette de la lumière en conséquence sur la surface à éclairer (BF) calculée par l'unité de commande (14), dans lequel
- la surface à éclairer (BF) est formée d'une seule pièce et
- la surface à éclairer (BF) d'une seule pièce conduit de la voie effective (16) à la voie cible (17) et les deux voies (16, 17) ne sont pas disposées immédiatement l'une à côté de l'autre,
**caractérisé en ce que**
- la seconde zone partielle (T2) comprend plus de 50% de la surface à éclairer (BF),
- le capteur (12) est en mesure de reconnaître, au moyen d'un traitement d'image des marquages au sol (18) différents et un feu de signalisation dans la zone environnante du véhicule automobile (11), et l'unité de commande est formée, et
- lors d'un changement de voie avant d'atteindre le feu de signalisation pour prendre en compte un statut du feu de signalisation lors du calcul de la surface à éclairer (BF).

2. Dispositif de projection de lumière (10) selon la revendication 1, dans lequel une ligne centrale (ML) située dans la direction de déplacement (20), qui divise à l'intérieur de la surface à éclairer (BF) la surface à éclairer (BF) en deux surfaces partielles de même taille, peut être différenciée.

3. Dispositif de projection de lumière (10) selon l'une quelconque des revendications précédentes, dans lequel la surface à éclairer (BF) est symétrique.

4. Dispositif de projection de lumière (10) selon l'une quelconque des revendications précédentes, dans lequel l'unité de commande (12) est formée pour ajouter des valeurs de décalage à des paramètres d'une répartition de lumière pour le calcul de la surface à éclairer (BF).

5. Dispositif de projection de lumière (10) selon la revendication 4, dans lequel les valeurs de décalage sont associées à une distance par rapport au véhicule automobile (11) et les valeurs de décalage sont déterminées en fonction de la distance par rapport au véhicule automobile (11), pour calculer une surface à éclairer (BF) en continu sur la base de la voie effective (16) à la voie cible (17).

6. Véhicule automobile (11) avec un dispositif de projection de lumière (10) selon l'une quelconque des revendications précédentes.

7. Procédé d'assistance lors d'un guidage routier pour un véhicule automobile (11) avec un système de navigation (13), un capteur (12), qui est réalisé en tant que caméra et une unité de projection (15) en réalisant les étapes de procédé suivantes :
a) détecter une voie effective (16), sur laquelle se trouve actuellement le véhicule automobile (11) au moyen du capteur (12),
b) fournir une voie cible (17) différente de la voie effective (16) pour le guidage routier par un système de navigation (13),
c) calculer une surface à éclairer (BF) d'une seule pièce en fonction de la voie effective (16) et de la voie cible (17), dans lequel la surface à éclairer (BF) d'une seule pièce présente le long d'une direction de déplacement (20) du véhicule automobile (11) une plus grande extension que perpendiculairement à la direction de déplacement (20) et la surface à éclairer (BF) d'une seule pièce présente une première zone partielle (T1) avec un premier centroïde (SF1), qui se situe sur la voie effective (16), dans lequel la première zone partielle (T1) s'étend sur toute une largeur de la voie effective (16) et la surface à éclairer (BF) d'une seule pièce présente une seconde zone partielle (T2) avec un second centroïde (SF2), qui se situe sur la voie cible (17), dans lequel la seconde zone partielle (T2) s'étend sur toute une largeur de la voie cible (17), et la surface à éclairer (BF) d'une seule pièce conduit de la voie effective (16) à la voie cible (17) et les deux voies (16, 17) ne sont pas disposées immédiatement l'une à côté de l'autre,
e) projeter de la lumière sur la surface à éclairer (BF) d'une seule pièce,
**caractérisé en ce que**
- la seconde zone partielle (T2) comprend plus de 50% de la surface à éclairer (BF),
- à l'étape a) s'effectue en outre une reconnaissance des différents marquages au sol (18) et d'un feu de signalisation dans une zone environnante du véhicule automobile (11), et
- à l'étape c) la surface à éclairer (BF) est calculée lors d'un changement de voie avant d'atteindre le feu de signalisation en fonction d'un statut du feu de signalisation.
